# EUROPÄISCHE PATENTSCHRIFT

(11) **EP 1 110 491 B1**
(45) Veröffentlichungstag und Bekanntmachung des Hinweises auf die Patenterteilung: **11.02.2004**
(21) Anmeldenummer: 99125727.0
(22) Anmeldetag: 23.12.1999
(51) Int. Cl.: A47G 27/02

(54) **Verwendung eines Bodenbelags aus einem elastisch verformbaren Material**
Use of a floor covering from an elastically deformable material
Utilisation d'un revêtement de sol d'une matière élastiquement déformable

(43) Veröffentlichungstag der Anmeldung: 27.06.2001
(73) Patentinhaber: Werksitz GmbH W. Milewski, 97475 Zeil am Main (DE)
(72) Erfinder: Milewski, Wolfgang, 97475 Zeil am Main (DE); Hafenecker, Simon, 96126 Hafenpreppach (DE)
(74) Vertreter: Zech, Stefan Markus Dipl.-Phys.

(56) Entgegenhaltungen:
- EP-A- 0 800 358
- WO-A-95/06780
- CH-A- 419 547
- DE-U- 8 632 856
- DK-B- 170 603
- FR-A- 1 384 544
- SE-C- 104 758

## Beschreibung

Die Erfindung betrifft eine Verwendung eines Bodenbelags aus einem elastisch verformbaren Material, insbesondere einem synthetischen Kautschuk, nach dem Oberbegriff des Anspruchs 1.

Derartige Bodenbeläge sind in verschiedenartigen Ausführungen bekannt und im praktischen Einsatz, siehe z.B. die WO-A-95 06780.

Auch aus der CH-A-419 547 oder der DK-B-170 603 ist jeweils ein Bodenbelag bekannt. Gemäß diesen Druckschriften weist der Bodenbelag auf der Oberseite und der Unterseite jeweils eine regelmäßige Anordnung aus Erhebungen auf, deren Projektionen einander nicht überlappen, sondern einen kleinen Abstand voneinander haben.

Bei diesen bekannten Anordnungen treten bei starker Druckbelastung erhebliche Zugbeanspruchungen in den relativ dünnen Abstandsbereichen zwischen den Vorsprüngen auf der Oberseite und denen auf der Unterseite auf, da durch die Druckbelastung die Unterseite des Belages zwischen den dort vorgesehenen Vorsprüngen stark nach unten (ggf. bis zum Aufliegen auf dem Fußboden) gedrückt wird. In diesen dünnen Abstandsbereichen können daher bei dauerhaft hoher Beanspruchung, insbesondere bei Wechselbelastungen mit relativ hoher Frequenz, Schäden auftreten. Derartige Schäden, zunächst in Form von Mikrorissen, ermöglichen das Eindringen von Staub und anderen Verschmutzungen in das Materialinnere, wo sie abrasiv wirken können und die materialschädigenden Auswirkungen der hohen mechanischen Beanspruchung noch verstärken.

Aus der EP-A-0 800 358 ist ein Bodenbelag bekannt, bei dem die auf der Unterseite vorgesehenen Vorsprünge Überlappungsbereiche mit den Vorsprüngen auf der Oberseite des Belages aufweisen. Durch eine solche Anordnung wird das Auftreten der oben genannten Probleme vermieden, der Bodenbelag wird jedoch notwendigerweise wesentlich steifer, was eine deutliche Verschlechterung bei einem entscheidenden Gebrauchswertparameter bedeutet.

Der Erfindung liegt daher die Aufgabe zugrunde, eine Verwendung eines Bodenbelags anzugeben, die sehr gute Dämpfungseigenschaften mit langer Haltbarkeit auch bei hoher Beanspruchung verbindet.

Die Aufgabe wird gelöst durch eine Verwendung eines Bodenbelags mit den Merkmalen des Anspruchs 1.

Die Erfindung schließt den wesentliche Gedanken ein, zusätzlich zu den ohne Überlappungsbereich mit den Vorsprüngen auf der Oberseite angeordneten Vorsprüngen auf der Unterseite des Belages dort weitere Vorsprünge vorzusehen, die als dynamische Begrenzungsmittel für ein Niederdrücken des Belages bei hoher Druckbelastung wirken. Die Höhe dieser Vorsprünge ist geringer als die Höhe derjenigen Vorsprünge auf der Unterseite des Bodenbelages, auf denen dieser im unbelasteten Zustand aufliegt, so daß sie erst ab einer gewissen Belastung (einem vorbestimmten Druck) zu wirken beginnen. Sie vergrößern dann mit einer Kennlinie, die über ihre Höhe und ihre Form sowie ihr Rastermaß einstellbar ist, die Steifigkeit des Belages gegenüber lokaler Belastung.

In einer bevorzugten Ausführung, die insbesondere leicht zu reinigen ist und hohen Ansprüchen hinsichtlich der Arbeitssicherheit und der ästhetischen Anmutung genügt, weisen die ersten Vorsprünge im wesentlichen die Form eines Kugelabschnitts auf. In einer Fortbildung dieser Ausführungsform sind sie aus einem größeren und einem auf diesen aufgesetzten kleineren Kugelabschnitt gebildet. Bei dieser Ausführung erzeugt die Relativbewegung des kleineren Kugelabschnitts gegenüber dem größeren bei Belastung einen zusätzlichen Dämpfungseffekt. Zudem sorgt die feingliedrigere Oberflächenstruktur für erhöhte Rutschsicherheit. Diese Effekte lassen sich im übrigen auch in anderen Kombinationen einer größeren mit einer kleineren geometrischen Grundform erreichen, so daß Ausführungen mit derart überlagerten geometrischen Grundformen allgemein als vorteilhaft angesehen werden können.

Die zweiten und/oder dritten (zusätzlichen) Vorsprünge auf der Unterseite des Belages haben in einer vorteilhaften Ausführung im wesentlichen die Form von flachen Prismen bzw. Pyramidenstümpfen oder aber die Form eines Kugelabschnittes, flachen Kegelstumpfes oder flachen Zylinders. Hierbei ist es von besonderem Vorteil, wenn - im Interesse einer differenzierten Einstellung der Dämpfungscharakteristik - für die zweiten und dritten Vorsprünge unterschiedliche Grundformen gewählt werden.

Da der Bodenbelag mit der Unterseite der zweiten Vorsprünge auf dem Fußboden aufliegt (und ggf. dort auch mit diesem verbunden ist) ist eine Ausführung der zweiten Vorsprünge mit einer zur Belags-Ebene parallelen Deckfläche zweckmäßig. Erleichterungen beim Zuschneiden und Verlegen sind mit einer Ausführung erreichbar, bei der die zweiten Vorsprünge geradlinige seitliche Begrenzungskanten aufweisen, also beispielsweise annähernd als Pyramidenstümpfe oder quadratische Prismen geformt sind. Eine in wünschenswerter Weise progressive Dämpfungscharakteristik der dritten Vorsprünge ergibt sich bei deren Ausführung als Kugelabschnitte oder flache Kegelstümpfe, wobei im letzteren Falle die Dämpfungscharakteristik neben den Abmessungen insbesondere auch über die Wahl des Ke-gelwinkels einstellbar ist.

In einer aus derzeitiger Sicht bevorzugten Kombination sind die zweiten Vorsprünge in Form quadratischer Prismen oder Pyramidenstümpfe mit abgerundeten Kanten und abgerundeten Übergangsbereichen zur Belag-Ebene und die dritten Vorsprünge in Form von Kugelabschnitten ausgeführt.

Die Abmessungen (Durchmesser bzw. Kantenabmessungen) der zweiten Vorsprünge stimmen in zweckmäßigen Ausführungen im wesentlichen mit deren Abständen überein, während die Abmessungen der dritten Vorsprünge deutlich geringer als deren Abstände sind. Sie betragen insbesondere weniger als 3/4 der jeweiligen Abstände, ggf. auch noch deutlich weniger.

Im Hinblick darauf, daß beim vorgeschlagenen Bodenbelag keine Überlappungen der ersten mit den zweiten Vorsprüngen auftreten und gleichwohl der Bodenbelag vollflächig ausreichend auf dem Fußboden abgestützt sein soll, stimmen die Rastermaße der Anordnungen der ersten und zweiten Vorsprünge zweckmäßigerweise überein. Auch das Rastermaß der Anordnung der dritten Vorsprünge kann hiermit übereinstimmen, es kann aber ggf. auch ein Vielfaches hiervon betragen. In der letztgenannten Ausführung wäre dann nicht jedem Vorsprung auf der Oberseite ein Begrenzer-Vorsprung auf der Unterseite zugeordnet, sondern beispielsweise nur jedem zweiten oder jedem dritten.

Die vorgeschlagene Verwendung eines Bodenbelags ist bevorzugt als ergonomische Steharbeitsplatzmatte für praktisch alle Arten von Steharbeitsplätzen, ausgeführt. Diese Verwendung kann zudem als Schutzvorrichtung für hochwertige Industrieböden eingesetzt werden. Auch in Arbeitsbereichen, wo regelmäßig hochwertige Gegenstände auf eine Weise gehandhabt werden, die die Gefahr eines Herabfallens birgt, stellt diese Verwendung eine äußerst zweckmäßige Schutzvorrichtung dar. Ein sinnvoller Einsatzbereich ist auch die Tierhaltung bzw. der Tiertransport. Die Isolierwirkung macht den Einsatz auch in Bereichen sinnvoll, wo unter Spannung stehende Bauteile berührt werden können und zusätzliche Sicherheit gegen einen Erdschluß geschaffen werden soll. Neben der Ausführung als abgegrenzte Matte ist auch eine Wand-zu-Wand-Verlegung möglich.

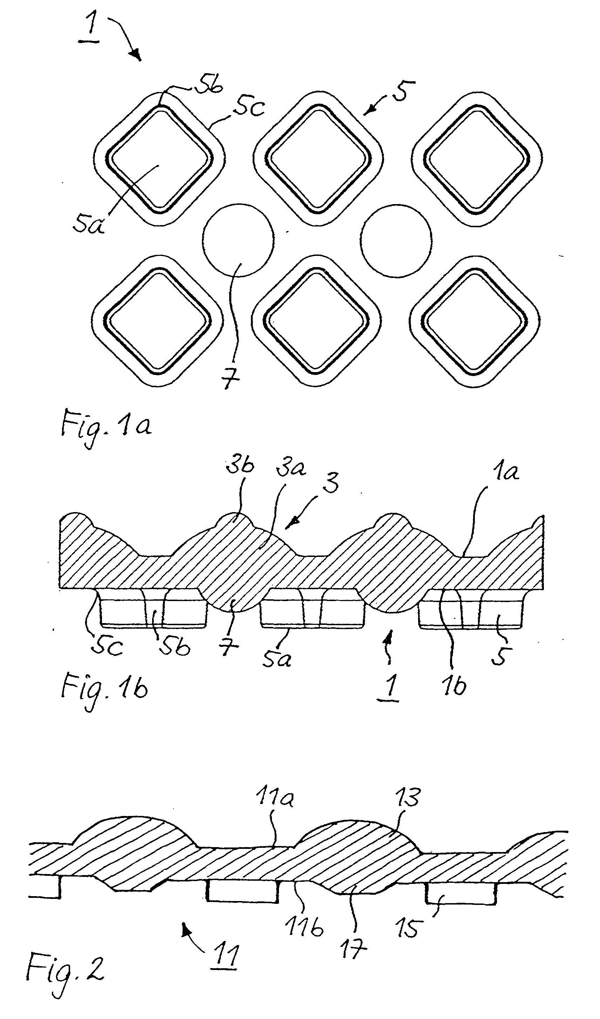

Vorteile und Zweckmäßigkeiten der Erfindung ergeben sich im übrigen aus den Unteransprüchen sowie der nachfolgenden Beschreibung bevorzugter Ausführungsbeispiele anhand der Figuren 1a a bis 5.

Die Figuren 1a und 1b zeigen einen Ausschnitt aus einem Nitril-Kautschuk-Bodenbelag 1 gemäß einer bevorzugten Ausführungsform der Erfindung. Fig. 1a zeigt eine Draufsicht auf die Unterseite des Belages und Fig. 1b eine Querschnittsdarstellung.

Auf der Oberseite 1a des Bodenbelages 1 hat dieser erste Vorsprünge bzw. Erhebungen 3, deren Form aus einem ersten, größeren Kugelabschnitt 3a und einem zweiten, wesentlich kleineren, Kugelabschnitt 3b, auf dem höchsten Punkt des ersten Kugelabschnitts 3a positioniert, zusammengesetzt ist. Die Höhe des ersten Kugelabschnitts beträgt etwa 1/5 bis 1/4 seines Durchmessers auf der Belagebene. Die Höhe des zweiten Kugelabschnitts 3b beträgt etwa 1/2 der Höhe des ersten Kugelabschnitts 3a, und die laterale Erstreckung des zweiten Kugelabschnitts entspricht etwa 1/3 derjenigen des ersten Kugelabschnitts.

Auf der Unterseite 1b des Bodenbelages 1 trägt dieser zunächst in den Zwischenräumen der Projektionen der ersten Vorsprünge 3 auf die Belag-Ebene angeordnete - also mit den ersten Vorsprüngen im wesentlichen nicht überlappende - zweite Vorsprünge bzw. Erhebungen 5 sowie zwischen diesen und konzentrisch mit den ersten Vorsprüngen 3 auf der Oberseite 1a angeordnete dritte Vorsprünge 7. (In den Figuren sind nur zwei der dritten Vorsprünge dargestellt; es ist aber zu verstehen, daß jedem der ersten Vorsprünge 3 auf der Unterseite 1b des Bodenbelages ein dritter Vorsprung 7 zugeordnet ist.)

Die zweiten Vorsprünge 5 haben eine zur Belag-Ebene parallele Stirnfläche 5a und die Form von quadratischen Pyramidenstümpfen mit abgerundeten Kantenbereichen 5b sowie abgerundeten Anschlußbereichen 5c zur Belagunterseite 1b. Die Kantenabmessungen der zweiten Vorsprünge 5 sind etwas geringer als ihr Abstand voneinander und liegen in der gleichen Größenordnung wie die laterale Erstreckung der ersten Vorsprünge 3 auf der Oberseite 1a des Belages.

Die dritten Vorsprünge 7 haben die Form von Kugelabschnitten und wesentlich geringere laterale Abmessungen als die ersten und zweiten Vorsprünge 3, 5 sowie eine Höhe die etwa 2/3 der Höhe der zweiten Vorsprünge 5 beträgt. Sie kommen also nur bei erheblicher lokaler Belastung des Bodenbelages 1 auf den zugeordneten ersten Vorsprüngen 3, die eine wesentliche Kompression und Durchbiegung des Belages bewirken, in Anlage mit dem darunterliegenden Fußboden. In diesem Fall stützen sie den Belag im Bereich der jeweils zugeordneten ersten Vorsprünge 3 zusätzlich ab - und zwar, infolge ihrer Kugelabschnittsform, mit einer progressiven Dämpfungskennlinie.

Fig. 2 zeigt ein weiteres Ausführungsbeispiel eines Nitril-Kautschuk-Bodenbelages 11 in Querschnittsdarstellung, auf dessen Oberseite 11a kugelabschnittsförmige erste Vorsprünge 13 in einem Abstand vorgesehen sind, der deutlich größer als der Abstand der ersten Vorsprünge 3 beim Bodenbelag 1 nach Fig. 1a und 1b ist und etwa der lateralen Abmessung der Vorsprünge 13 auf der Belag-Ebene entspricht. Auf der Unterseite 11b sind in den Abstandsbereichen zwischen den Projektionen der ersten Vorsprünge 13 zweite Vorsprünge 15 in Form flacher zylindrischer Noppen vorgesehen. Auch der Abstand der zweiten Vorsprünge ist - bezogen auf ihre laterale Abmessung - wesentlich größer als bei den zweiten Vorsprüngen 5 nach Fig. 1a und 1b. Der Bodenbelag 11 hat damit unter der Voraussetzung gleicher Materialeigenschaften eine geringere Steifigkeit als der Bodenbelag der ersten Ausführungsform.

Unter den ersten Vorsprüngen 13 sind, konzentrisch mit diesen, dritte Vorsprünge 17 angeordnet, die hier die Form von Kegelabschnitten haben und deren laterale Erstreckung auf der Belagebene (ebenso wie bei der ersten Ausführungsform) kleiner als diejenige der ersten Vorsprünge 13 auf der Oberseite 11a ist.

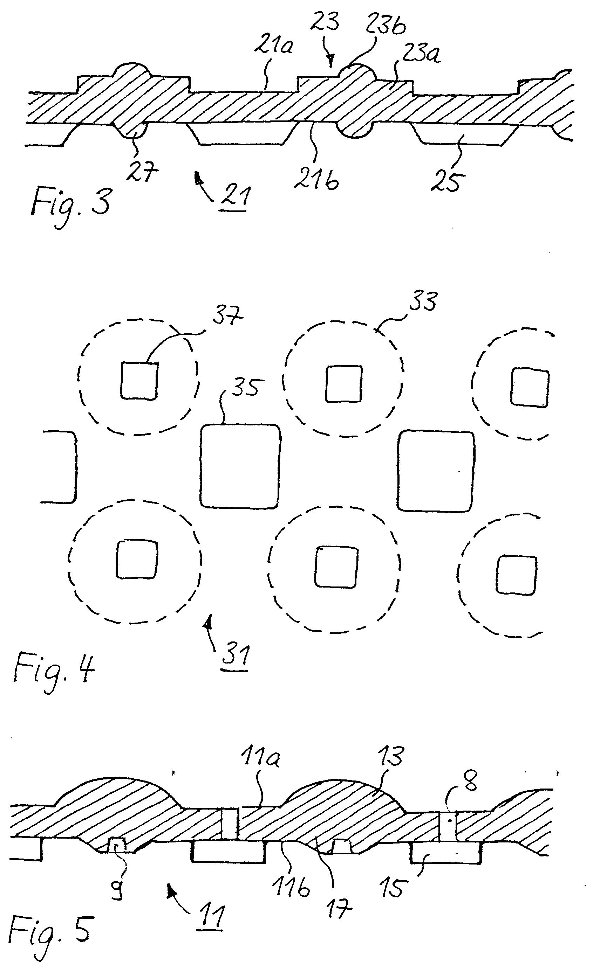

In Fig. 3 ist in einer Querschnittsdarstellung als weitere Ausführungsform der Erfindung ein Bodenbelag 21 skizzenartig dargestellt, der auf der Oberseite 21a erste Vorsprünge 23 trägt, die aus einem flachen Zylinderabschnitt 23a und einem auf diesen konzentrisch aufgesetzten Kugelabschnitt 23b zusammengesetzt sind. In den Zwischenräumen der Projektionen der ersten Vorsprünge 23 sind auf der Unterseite 21b des Belages 21 zweite Vorsprünge 25 in Kegelstumpfform angeordnet. Unterhalb der ersten Vorsprünge 23 sind, konzentrisch mit deren Kugelabschnitten 23b und mit im wesentlichen übereinstimmenden Abmessungen, dritte Vorsprünge 27 als dynamische Verformungs-Begrenzer vorgesehen.

In Fig. 4 ist in einer Untersicht eines weiteren Bodenbelages 31 eine weitere Ausführungsform der Erfindung skizzenartig dargestellt. Der Belag weist auf der Oberseite (in der Figur gestrichelt gezeichnete) kugelabschnittsförmige erste Vorsprünge 33 auf. In den Zwischenräumen zwischen den ersten Vorsprüngen 33 sind auf der Unterseite des Belages zweite Vorsprünge 35 in Gestalt von flachen quadratischen Prismen mit abgerundeten Kanten- und Eckbereichen vorgesehen. Diagonal zwischen diesen zweiten Vorsprüngen 35 und ausgerichtet mit der Mittenachse der ersten Vorsprünge 33 sind auf der Belagunterseite weiterhin dritte Vorsprünge 37 vorgesehen. Diese haben hier ebenfalls die Form von flachen quadratischen Prismen, aber geringere laterale Abmessungen und eine geringere Höhe als die zweiten Vorsprünge 35, so daß sie nur im Belastungsfall in Anlage mit dem Fußboden kommen und zusätzlich dämpfend wirken.

Die Ausführung der Erfindung ist nicht auf die oben beschriebenen Beispiele beschränkt, sondern ebenso in einer Vielzahl von Abwandlungen möglich, die im Rahmen fachgemäßen Handelns liegen. Insbesondere sind die geometrischen Formen, Abmessungen und Rastermaße der ersten, zweiten und dritten Vorsprünge in Anpassung auf den konkreten Einsatzzweck und die Belastungsanforderungen des Bodenbelages sowie zur Erzielung vorbestimmter Dämpfungskennlinien vielfältig kombinier- und variierbar.

In einer speziellen Fortbildung des Erfindungsgedankens, der anhand von Fig. 5 veranschaulicht ist, weist der Bodenbelag Durchbrüche 8 (Perforationen) bzw. in der Belagunterseite vorgesehene Rücksprünge 9 auf, in denen die Belagdicke lokal verringert ist. Mit diesen speziellen Ausführungen ist eine weiter differenzierte Einstellung der elastischen Eigenschaften des Bodenbelages einerseits und - speziell im Falle von Perforationen - in vorteilhafter Weise der Ablauf von auf der Belagoberseite eventuell angesammelten Wasser (oder anderen Flüssigkeiten) zu erreichen. Die zusätzlichen Durchbrüche 8 oder Rücksprünge 9 sind in besonders einfacher Weise in Kreisform darstellbar, können aber auch eine dem Verlauf der Zwischenräume zwischen den ersten und zweiten Vorsprüngen des Bodenbelages folgende langgestreckte Form haben. Eine solche langgestreckte Form umfaßt insbesondere auch Kreisabschnitte, kann aber auch eng an die Form der Zwischenräume angepaßt sein.

### Bezugszeichenliste

- 1; 11; 21; 31: Nitril-Kautschuk-Bodenbelag
- 1a; 11a; 21a: Oberseite
- 1b; 11b; 21b: Unterseite
- 3; 13; 23; 33: erster Vorsprung
- 3a: erster Kugelabschnitt
- 3b: zweiter Kugelabschnitt
- 5; 15; 25; 35: zweiter Vorsprung
- 5a: Stirnfläche
- 5b: abgerundeter Kantenbereich
- 5c: abgerundeter Anschlußbereich
- 7; 17; 27; 37: dritter Vorsprung
- 8: Durchbrüche
- 9: Rücksprünge
- 23a: Zylinderabschnitt
- 23b: Kugelabschnitt

## Patentansprüche

1. Verwendung eines Bodenbelags (1; 11; 21; 31) aus einem elastisch verformbaren Material, insbesondere einem synthetischen Kautschuk, als Arbeitsplatzmatte zur Auflage auf einem Fußboden, wobei der Bodenbelag auf der Oberseite mit einer regelmäßigen Anordnung aus ersten Vorsprüngen (3; 13; 23; 33) und auf der Unterseite mit einer regelmäßigen Anordnung aus zweiten Vorsprüngen (5; 15; 25; 35) versehen ist, wobei die Projektionen der ersten Vorsprünge und der zweiten Vorsprünge auf die Belags-Ebene keinen Überlappungsbereich aufweisen,
**dadurch gekennzeichnet,**
**dass** auf der Unterseite innerhalb der Projektionen der ersten Vorsprünge jeweils dritte Vorsprünge (7; 17; 27; 37) mit gegenüber den zweiten Vorsprüngen geringerer Höhe vorgesehen sind, derart, dass der Bodenbelag im unbelasteten Gebrauchszustand allein mit den zweiten Vorsprüngen auf einem Fußboden aufliegt, jedoch bei Überschreitung einer vorbestimmten Belastung lokal auch die dritten Vorsprünge mit dem Fußboden in Kontakt kommen.

2. Verwendung eines Bodenbelags nach Anspruch 1,
**dadurch gekennzeichnet,**
**dass** die ersten Vorsprünge (3; 13; 33) im Wesentlichen die Form eines Kugelabschnitts aufweisen.

3. Verwendung eines Bodenbelags nach Anspruch 1 oder 2,
**dadurch gekennzeichnet,**
**dass** die zweiten und/oder dritten Vorsprünge (5; 35, 37) im Wesentlichen die Form eines flachen quadratischen Prismas oder Pyramidenstumpfes aufweisen.

4. Verwendung eines Bodenbelags nach einem der vorangehenden Ansprüche,
**dadurch gekennzeichnet,**
**dass** die zweiten und/oder dritten Vorsprünge (15, 17; 25, 27) im Wesentlichen die Form eines Kugelabschnitts, flachen Kegelstumpfes oder flachen Zylinders aufweisen.

5. Verwendung eines Bodenbelags nach Anspruch 3 und 4,
**dadurch gekennzeichnet,**
**dass** die zweiten Vorsprünge (5) die Form eines quadratischen Prismas oder Pyramidenstumpfes mit abgerundeten Kanten (5b) und Übergangsbereichen (5c) zur Belag-Ebene und die dritten Vorsprünge (7) die Form eines Kugelabschnitts aufweisen.

6. Verwendung eines Bodenbelags nach einem der vorangehenden Ansprüche,
**dadurch gekennzeichnet,**
**dass** die Abmessungen, insbesondere Durchmesser oder Kantenabmessungen, der zweiten Vorsprünge (5; 25) im Wesentlichen mit ihren Abständen übereinstimmen oder diese übersteigen.

7. Verwendung eines Bodenbelags nach einem der vorangehenden Ansprüche,
**dadurch gekennzeichnet,**
**dass** die Abmessungen, insbesondere Durchmesser oder Kantenabmessungen, der dritten Vorsprünge (7; 17; 27; 37) wesentlich kleiner als deren Abstände sind, insbesondere weniger als 3/4 hiervon betragen.

8. Verwendung eines Bodenbelags nach einem der vorangehenden Ansprüche,
**dadurch gekennzeichnet,**
**dass** die Rastermaße der Anordnungen der ersten und zweiten Vorsprünge im wesentlichen übereinstimmen und das Rastermaß der Anordnung der dritten Vorsprünge mit dem Rastermaß der Anordnung der ersten und zweiten Vorsprünge übereinstimmt oder ein Vielfaches hiervon beträgt.

9. Verwendung eines Bodenbelags nach einem der vorangehenden Ansprüche,
**dadurch gekennzeichnet,**
**dass** die Vorsprünge (3; 23) aus zwei einander überlagerten geometrischen Grundformen, insbesondere einem größeren Kugelabschnitt (3a) und einem auf diesen aufgesetzten kleineren Kugelanschnitt (3b), gebildet sind.

10. Verwendung eines Bodenbelags nach einem der vorangehenden Ansprüche,
**dadurch gekennzeichnet,**
**dass** die Höhe der ersten Vorsprünge weniger als 1/3 ihrer größten Abmessung auf der Belag-Ebene beträgt und die Höhe der zweiten und/oder dritten Vorsprünge im Bereich zwischen 1/5 und 1/2 ihrer Größenabmessung auf der Belag-Ebene liegt.

11. Verwendung eines Bodenbelags nach einem der vorangehenden Ansprüche,
**gekennzeichnet durch**
in Zwischenräumen zwischen den ersten und zweiten Vorsprüngen angeordnete Durchbrüche (8) und/oder in der Unterseite vorgesehene Rücksprünge (9).

12. Verwendung eines Bodenbelags nach Anspruch 11,
**dadurch gekennzeichnet,**
**dass** die Durchbrüche (8) bzw. Rücksprünge (9) im Querschnitt kreisförmig ausgebildet sind oder Kreisabschnittsbereiche aufweisen.

## Claims

1. Use of a floor covering (1; 11; 21; 31) comprising an elastically deformable material, in particular a synthetic rubber, as a workplace mat for laying on a floor, wherein the floor covering is provided on the upper side with a regular arrangement of first projections (3; 13; 23; 33) and on the underside with a regular arrangement of second projections (5; 15; 25; 35), wherein the extents of the first projections and the second projections do not have a region of overlap in the plane of the covering, **characterised in that** third projections (7; 17; 27; 37), which are of lower height than the second projections, are provided on the underside within the extents of the first projections so that the floor covering rests on the floor only by means of the second projections in an unloaded state of use, but, when a predetermined load is exceeded, the third projections locally also come into contact with the floor.

2. Use of a floor covering according to claim 1, **characterised in that** the first projections (3; 13; 33) are substantially in the shape of a spherical segment.

3. Use of a floor covering according to claim 1 or 2, **characterised in that** the second and/or third projections (5; 35, 37) are substantially in the shape of a flat square prism or truncated pyramid.

4. Use of a floor covering according to any one of the preceding claims, **characterised in that** the second and/or third projections (15, 17; 25, 27) are substantially in the shape of a spherical segment, a flat truncated cone or a flat cylinder.

5. Use of a floor covering according to claims 3 and 4, **characterised in that** the second projections (5) are in the shape of a square prism or truncated pyramid with rounded edges (5b) and transition regions (5c) to the plane of the covering, and the third projections (7) are in the shape of a spherical segment.

6. Use of a floor covering according to any one of the preceding claims, **characterised in that** the dimensions, in particular the diameters or edge measurements of the second projections (5; 25) substantially correspond to their spacings or exceed them.

7. Use of a floor covering according to any one of the preceding claims, **characterised in that** the dimensions, in particular the diameters or edge measurements of the third projections (7; 17; 27; 37) are substantially smaller than their spacings, in particular are less than 3/4 of the size thereof.

8. Use of a floor covering according to any one of the preceding claims, **characterised in that** the grid dimensions of the arrangements of the first and second projections substantially correspond, and the grid dimension of the arrangement of the third projections corresponds to the grid dimension of the arrangement of the first and second projections or is a multiple thereof.

9. Use of a floor covering according to any one of the preceding claims, **characterised in that** the projections (3; 23) are formed from two superimposed basic geometric shapes, in particular a larger spherical segment (3a) and a smaller spherical segment (3b) placed thereon.

10. Use of a floor covering according to any one of the preceding claims, **characterised in that** the height of the first projections is less than 1/3 of their greatest dimension in the plane of the covering, and the height of the second and/or third projections lies in the range between 1/5 and 1/2 of their dimension in the plane of the covering.

11. Use of a floor covering according to any one of the preceding claims, **characterised by** openings (8) provided in gaps between the first and second projections and/or recesses (9) provided in the underside.

12. Use of a floor covering according to claim 11, **characterised in that** the openings (8) and/or recesses (9) are circular in cross-section or have regions which are circular segments.

## Revendications

1. Utilisation d'un revêtement de sol (1; 11; 21; 31) en un matériau élastiquement déformable, notamment un caoutchouc synthétique, comme tapis pour une place de travail pour l'application à un sol, où le revêtement de sol présente au côté supérieur un agencement régulier de premières saillies (3; 13; 23; 33) et au côté inférieur un agencement régulier de deuxièmes saillies (5; 15; 25; 35), où les projections des premières saillies et des deuxièmes saillies, sur le plan du revêtement, ne présentent pas de zone de recouvrement, **caractérisée en ce que** sont prévues au côté inférieur à l'intérieur des projections des premières saillies respectivement des troisièmes saillies (7; 17; 27; 37) d'une hauteur plus petite par rapport aux deuxièmes saillies de telle sorte que le revêtement de sol, à l'état d'utilisation non chargé, s'applique uniquement avec les deuxièmes saillies sur un sol, cependant lors d'un dépassement d'une charge prédéterminée, localement également les troisièmes saillies viennent en contact avec le sol.

2. Utilisation d'un revêtement de sol selon la revendication 1, **caractérisée en ce que** les premières saillies (3; 13; 33) ont sensiblement la forme d'un segment sphérique.

3. Utilisation d'un revêtement de sol selon la revendication 1 ou 2, **caractérisée en ce que** les deuxièmes et/ou troisièmes saillies (5; 35; 37) ont sensiblement la forme d'un prisme carré plat ou d'un tronc de pyramide.

4. Utilisation d'un revêtement de sol selon l'une des revendications précédentes, **caractérisée en ce que** les deuxièmes et/ou troisièmes saillies (15; 17; 25; 27) ont sensiblement la forme d'un segment sphérique, d'un tronc de cône plat ou d'un cylindre plat.

5. Utilisation d'un revêtement de sol selon la revendication 3 et 4, **caractérisée en ce que** les deuxièmes saillies (5) ont la forme d'un prisme carré ou d'un tronc de pyramide avec des arêtes arrondies (5b) et des zones de transition (5c) au plan du revêtement, et les troisièmes saillies (7) ont la forme d'un segment sphérique.

6. Utilisation d'un revêtement de sol selon l'une des revendications précédentes, **caractérisée en ce que** les dimensions, notamment le diamètre ou les dimensions des arêtes des deuxièmes saillies (5; 25) coïncident sensiblement avec leurs espacements ou dépassent ceux-ci.

7. Utilisation d'un revêtement de sol selon l'une des revendications précédentes, **caractérisée en ce que** les dimensions, notamment le diamètre ou les dimensions des arêtes, des troisièmes saillies (7; 17; 27; 37) sont sensiblement plus petites que leurs espacements, et représentent notamment moins que 3/4 de celles-ci.

8. Utilisation d'un revêtement de sol selon l'une des revendications précédentes, **caractérisée en ce que** les dimensions modulaires des agencements des premières et deuxièmes saillies coïncident sensiblement, et que la dimension modulaire de l'agencement des troisièmes saillies coincide avec la -dimension modulaire de l'agencement des premières et deuxièmes saillies ou représente un multiple de celles-ci.

9. Utilisation d'un revêtement de sol selon l'une des revendications précédentes, **caractérisée en ce que** les saillies (3; 23) sont.constituées de deux formes de base géométriques superposées, notamment d'un segment sphérique plus grand (3a) et d'un segment sphérique plus petit (3b) placé sur celui-ci..

10. Utilisation d'un revêtement de sol selon l'une des revendications précédentes, **caractérisée en ce que** la hauteur des premières saillies représente moins que 1/3 de leur dimension la plus grande sur le plan du revêtement, et que la hauteur des deuxièmes et/ou troisièmes saillies se situe dans la plage entre 1/5 et 1/2 de leur dimension de grandeur sur le plan du revêtement.

11. Utilisation d'un revêtement de sol selon l'une des revendications précédentes, **caractérisée par** des perçages (8) ménagés dans les espaces intermédiaires entre les premières. et deuxièmes saillies et/ou des retraits (9) prévus au côté inférieur.

12. Utilisation d'un revêtement de sol selon la revendication 11, **caractérisée en ce que** les perçages (8) respectivement les retraits (9) sont réalisés en une forme circulaire en section transversale ou présentent des zones de segments de cercle.
